# EUROPÄISCHE PATENTSCHRIFT

(11) **EP 2 387 663 B1**
(45) Veröffentlichungstag und Bekanntmachung des Hinweises auf die Patenterteilung: **24.07.2013**
(21) Anmeldenummer: 09778661.0
(22) Anmeldetag: 23.09.2009
(51) Int. Cl.: F03B 1/02

(54) **FREISTRAHLTURBINE UND VERFAHREN ZUM HERSTELLEN ODER NACHRÜSTEN EINES LAUFRADS EINER FREISTRAHLTURBINE**
FREE-JET TURBINE AND METHOD OF PRODUCING OR RETROFITTING THE RUNNER OF A FREE-JET TURBINE
TURBINE À JET LIBRE ET PROCÉDÉ DE PRODUCTION OU D'INSTALLATION APRÈS COUP DU ROUE D'UNE TURBINE À JET LIBRE

(30) Priorität: 13.01.2009 DE 102009004816
(43) Veröffentlichungstag der Anmeldung: 23.11.2011
(73) Patentinhaber: Voith Patent GmbH, 89522 Heidenheim (DE)
(72) Erfinder: HORN, Günther, 89522 Heidenheim (DE); MURATI, Elvir, 89537 Giengen (DE); CHRIST, Daniel, 89522 Heidenheim (DE)
(74) Vertreter: Dr. Weitzel & Partner
(86) Internationale Anmeldenummer: PCT/EP2009/006853
(87) Internationale Veröffentlichungsnummer: WO 2010/081499

(56) Entgegenhaltungen:
- EP-A1- 2 110 545
- WO-A1-02/42638
- JP-A- 2001 153 019
- US-A- 2 502 021

## Beschreibung

Die Erfindung betrifft eine Freistrahlturbine zum Erzeugen elektrischer Energie.

Freistrahlturbinen sind aus einer Vielzahl von Veröffentlichungen bekannt. Sie sind insbesondere für große Fallhöhen bei geringem Durchsatz geeignet.

DE 485 262 beschreibt eine Freistrahlturbine mit einer Düse, die sich im Umfangsbereich des Laufrades befindet.

DE 349 531 beschreibt eine Wasserturbine mit axialer und radialer Beaufschlagung des Laufrades.

WO 02/42638 A1 beschreibt eine Vielzahl von über den Umfang eines Laufrads verteilten Bechern einer Pelton-Turbine, wobei jeder Becher zwei Schalen aufweist, die axial nebeneinander liegen und durch einen Strahlteiler voneinander getrennt sind und die vom Wasserstrahl beaufschlagte Arbeitsflächen haben. Dabei sind die Arbeitsflächen aus einem Einsatzkörper gebildet, wobei der Einsatzkörper von einem Tragkörper getragen am Laufrad fixiert ist. Tragkörper und Einsatzkörper weisen dabei die Gestalt eines PeltonBechers auf.

US 2 502 021 A und JP 2001 153010 A beschreiben jeweils ein Laufrad mit einer Mehrzahl über den Umfang des Laufrads verteilten Bechern, welche jeweils zwei axial nebeneinander liegende Schalen aufweisen, die durch einen Strahlteiler voneinander getrennt sind, wobei der Strahlteiler durch Schweißen mit den beiden Schalen verbunden ist.

Die am meisten verbreitete Bauart von Freistrahlturbinen sieht eine Mehrzahl von Düsen vor, die im Umfangsbereich des Laufrades angeordnet sind. Die aus den Düsen austretenden Strahlen verlaufen im Wesentlichen tangential zum Laufrad. Das Laufrad weist eine Vielzahl von Bechern (Peltonbechern) auf, auf welche die Wasserstrahlen aus den Düsen auftreffen. Dabei werden die Wasserstrahlen um wenigstens annähernd 180 Grad umgelenkt.

Die Becher des Laufrades einer Wasserstrahlturbine weisen im Allgemeinen zwei Schalen auf, die axial nebeneinander liegen, durch einen Strahlteiler voneinander getrennt sind, und die vom Wasserstrahl beaufschlagte Arbeitsflächen haben. Die Arbeitsflächen sind die entscheidenden hydraulischen Elemente. Sie werden entsprechend den Betriebsparametern der Turbine gestaltet, somit in erster Linie von der Fallhöhe und vom Durchsatz, aber auch in Abhängigkeit von anderen räumlichen Gegebenheiten. Da die Betriebsparameter von Anlage zu Anlage höchst unterschiedlich sind, sind auch die Turbinen, und insbesondere die Becher unterschiedlich zu gestalten. Der konstruktive Aufwand und der Fertigungsaufwand sind entsprechend hoch.

Der Erfindung liegt die Aufgabe zugrunde, eine Freistrahlturbine anzugeben, die derart gestaltet ist, dass sich der konstruktive Aufwand verringern lässt.

Diese Aufgabe ist bei einer Freistrahlturbine gemäß Anspruch 1 gelöst. Der Anspruch 8 beschreibt ein Verfahren zum Herstellen oder Nachrüsten eines Laufrads einer derartigen Freistrahlturbine.

Es wird Folgendes vorgesehen:
- Die Arbeitsfläche wird ganz oder teilweise aus einem Einsatzkörper gebildet, somit nicht aus einem konventionellen Becher.
- Der Einsatzkörper wird an einem Tragkörper angeordnet, der am Laufrad fixiert ist.
- Der Einsatzkörper ist vom Tragkörper leicht entfernbar, und auch ebenso leicht wieder an diesem fixierbar. Die Vorgänge des Entfernens beziehungsweise des Fixierens lassen sich in kurzer Zeit durchführen, beispielsweise pro Turbine in wenigen Mannstunden, zum Beispiel während eines halben Arbeitstages.

Die Einsatzkörper können aus jeglichem Material bestehen, beispielsweise aus Stahl, aus Kunststoff, aus glasfaserverstärktem Kunststoff, aus Keramik, oder aus einem Komposit aus verschiedenen Materialien. Sie lassen sich durch Gießen, Fräsen oder sonstige Herstellungsverfahren erzeugen. Da die Einsatzkörper von den Tragkörpern getragen sind, sind die Anforderungen an die Festigkeit der Einsatzkörper minimal. Die Einsatzkörper haben lediglich hydraulische Aufgaben zu erfüllen. Das Volumen eines Einsatzkörpers und damit auch die Materialmenge können extrem gering sein. Deswegen lassen sich höchstwertige Werkstoffe verwenden, bei relativ geringen Kosten. Die Tragkörper hingegen haben die Aufgabe, die extrem hohen Fliehkräfte aufzunehmen, zugleich aber auch die Kräfte, die sich aus dem Strahldruck ergeben.

Sie müssen lediglich eine Auflagefläche haben, auf welcher eine entsprechende Fläche des betreffenden Einsatzkörpers satt aufliegt. Die erfindungsgemäße Ausführungsform besteht darin, dass sowohl die Tragkörper als auch die Einsatzkörper die Gestalt von Peltonbechern haben.

Die Erfinder haben somit eine geschickte Trennung der Funktionen vorgenommen: Die Tragkörper müssen lediglich eine hohe Festigkeit aufweisen, damit sie zuverlässig am Laufrad fixiert werden können und dem Strahldruck standhalten. Die Einsatzkörper hingegen haben einzig und allein hydraulische Aufgaben zu übernehmen, und müssen allenfalls noch eine Abrasions- oder Erosionsfestigkeit haben.

Der einzelne Einsatzkörper kann auf unterschiedliche Weise und aus unterschiedlichen Materialien hergestellt sein. So kann er beispielsweise aus einer Laminat-Platte hergestellt sein, zum Beispiel auf Kunststoffbasis mit Glasfaser- oder Kohlenfaserverstärkung, er kann ein Verbundprodukt sein kombiniert aus unterschiedlichen Materialpaarungen, zum Beispiel Metall-Laminat, MetallKeramik, Keramik-Laminat, kohlenstofffaserverstärkter Kunststoff-Metall, und andere Paarungen.

Die Verbindung zwischen dem Tragkörper und dem Einsatzkörper lässt sich auf unterschiedliche Weise herstellen, beispielsweise durch Verkleben, durch Verschrauben. Dabei sollte auf das leichte Entfernen und wieder Fixieren geachtet werden.

Gegebenenfalls lassen sich Materialien auswählen, bei denen die wasserberührte Oberfläche (= Arbeitsfläche) unbearbeitet bleibt, sondern so bleibt, wie sie nach dem Formprozess erzeugt wurde.

Ein ganz entscheidender Vorteil erfindungsgemäßer Freistrahlturbinen liegt in der Herstellung beziehungsweise in der Senkung von deren Kosten. So kann wie Folgt vorgegangen werden:
- Es werden Laufräder in einer größeren Anzahl erzeugt, und zwar alle nach ein- und derselben Konstruktion, das heißt identisch miteinander.
- Je nach Anwendungsfall werden Einsatzkörper erzeugt, die auf die Betriebsparameter (Fallhöhe, Durchsatz) der betreffenden Anlage gestaltet sind. Die Arbeitsflächen der Einsatzkörper sind somit von Anlage zu Anlage verschieden, und damit auch die Einsatzkörper selbst. Die Tragkörper können stets dieselben sein, genau so wie die Laufräder. Einsatzkörper und Anlagekörper müssen in jedem Falle Auflageflächen haben, die miteinander kongruent sind.
- Es können daher im gegebenen Falle eines der vorgefertigten Laufräder kombiniert werden mit Einsatzkörpern, die bei der Verwirklichung eines Projektes eigens angefertigt werden.
- Auch ist es denkbar, dass Einsatzkörper in Serie vorgefertigt, auf Lager gelegt, und im Bedarfsfall mit einem Laufrad vereinigt werden.
- Die Serienfertigung ermöglicht somit eine Mengenrationalisierung und damit eine erhebliche Einsparung an Herstellungskosten.

Aus der Erfindung ergeben sich zahlreiche Vorteile:
- Die Einsatzkörper können aus besonders verschleiß- und kavitationsfesten Materialien hergestellt werden. Auch sind Kombinationen von Werkstoffen möglich, je nach Beanspruchung innerhalb der Einsatzkörper.
- Durch einen Einsatzkörper lässt sich die Form des Bechers derart gestalten, dass Erosionsvorgänge abgeschwächt werden.
- Der Einsatzkörper lässt sich bei Verschleiß leicht austauschen. Der (metallische) Tragkörper wird durch den Einsatzkörper geschützt.
- Bei herkömmlichen Freistrahlturbinen spielt die Unwucht in Folge unsymmetrischer Masseverteilungen eine große Rolle. Zum Beseitigen von Unwuchten wird an einzelnen Stellen von Peltonbechern Material aufgetragen (zum Beispiel durch Aufschweißen) oder abgetragen. Dies lässt sich bei Anwendungen von Einsatzkörpern viel leichter durchführen, nämlich durch Gewichtszugabe oder -reduzierung am Einsatzkörper selbst.
- Beim Austausch von Einsatzkörpern braucht nicht das komplette Laufrad demontiert zu werden. Es genügt, die Einsatzkörper selbst auszutauschen.
- Bei herkömmlichen Freistrahlturbinen treten mechanische Schwingungen auf. Dabei handelt es sich um Auslenkungen oder Verformungen, die zu Spannungen führen. Stahl verfügt über sehr geringe Dämpfungseigenschaften, sodass die Becher lange und mit hohen Amplituden nachschwingen.
- Bei entsprechender Materialwahl haben Einsatzkörper dämpfende Eigenschaften, sodass das Problem minimiert wird.
- Einsatzkörper gemäß der Erfindung sind auch vorteilhaft zur Beeinflussung von Eigenfrequenzen zur Vermeidung von Resonanz. Auch diesem Zwecke lässt sich das Gewicht der Einsatzkörper erhöhen oder verringern. So können beispielsweise Gewichte in den Einsatzkörper eingearbeitet werden, sodass ein Auftragen oder Abtragen von Material entfällt.
- Die wasserberührten Flächen der Einsatzkörper können von geringer Oberflächenqualität sein. Das bei Peltonbechern aufwendige Polieren kann entfallen. Eine rauere Oberfläche kann außerdem die Klebeverbindung zwischen dem metallischen Tragkörper und dem Einsatzkörper begünstigen. Die Oberflächen der Tragkörper (die wiederum peltonbecherartig gestaltet sein können), können bei größeren Fertigungstoleranzen gefertigt werden, als klassische Peltonbecher, da ja Ungenauigkeiten durch eine Klebeschicht ausgeglichen werden können.
- Die wasserführenden Flächen (Arbeitsflächen) der Einsatzkörper lassen sich mit geringeren Toleranzen fertigen, als manuell bearbeitete Becher. Dadurch lässt sich die geforderte, hydraulisch bedingte Soll-Geometrie genauer einhalten, und damit der Wirkungsgrad günstig beeinflussen.
- Der erfindungsgemäße Einsatzkörper bietet eine große Flexibilität bezüglich der hydraulischen Formgebung. Die hydraulische Form kann durch Einsetzen eines beliebig geformten Einsatzkörpers auch nachträglich geändert werden, zum Beispiel zur Anpassung an veränderte Randbedingungen oder zum Umsetzen neuer Erkenntnisse bezüglich der hydraulischen Formen.
- Da die Einsatzkörper leicht entfernt und auch leicht wieder eingesetzt werden können, lässt sich eine Inspektion des Laufrades einfacher durchführen. Hier kommen beispielsweise die Rissprüfung in Form einer Ultraschallprüfung in Betracht, die Farbeindringprüfung sowie die Magnetpulverprüfung. Würde man hingegen die Peltonbecher beschichten, statt mit einem Einsatzkörper zu bestücken, so wären diese Prüfungen nicht möglich, da dann die metallische Oberfläche des Bechers nicht zugänglich ist.

Die Erfindung ist anhand der Zeichnung näher erläutert. Darin ist im Einzelnen Folgendes dargestellt:
- Figur 1: zeigt in einem Axialschnitt einen Becher einer Freistrahlturbine (Peltonbecher).
- Figur 2: zeigt einen Ausschnitt aus einem Peltonbecher gemäß einer zweiten Ausführungsform.
- Figur 3: zeigt einen Peltonbecher gemäß einer dritten Ausführungsform.

Alle drei Ausführungsformen umfassen einen Tragkörper 1, der nach Art eines herkömmlichen Peltonbechers gestaltet ist. Er ist zweiflutig. Er besteht im vorliegenden Falle aus einem Metall, beispielsweise aus Stahl.

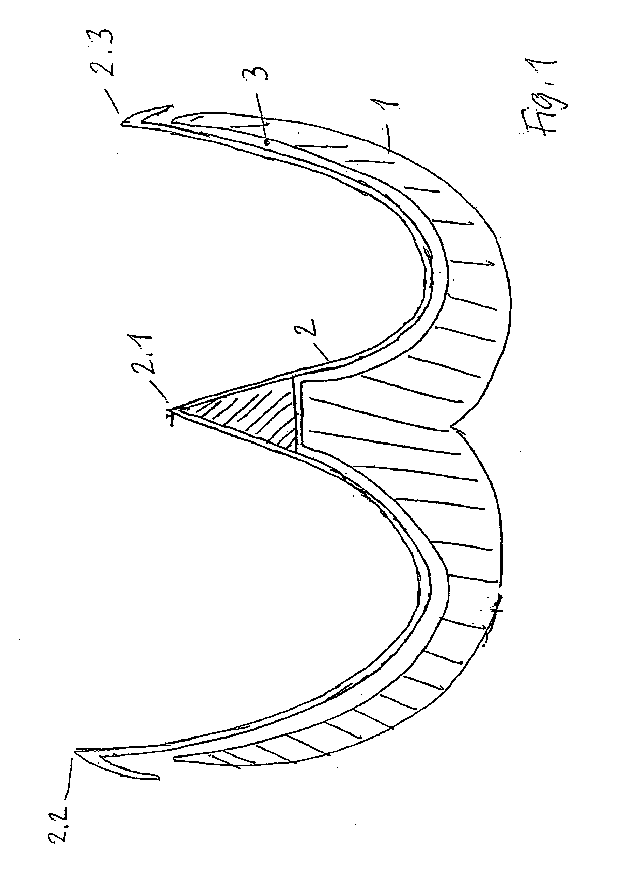

Der Tragkörper 1 gemäß Figur 1 trägt einen Einsatzkörper 2. Der Einsatzkörper 2 kann aus jeglichem Material bestehen, beispielsweise aus einem Verbundmaterial, aus Polymer, aus einem Metall, aus Keramik, aus einem kohlenfaserverstärkten Material wie beispielsweise Kunststoff, oder aus einer Paarung solcher Materialien.

Der Einsatzkörper 2 ist mit dem Tragkörper 1 durch Kleben verbunden. Siehe die Klebstoffschicht 3. Dabei ist der Einsatzkörper 2 vom Tragkörper 1 leicht entfernbar. Hier kann ein Klebstoff 3 verwendet werden, der durch Erwärmen seine Klebekraft verliert.

Der Einsatzkörper 2 weist eine Spitze 2.1 auf. Diese bildet einen Strahlteiler (Splitter). Der Einsatzkörper umgreift mit seinen beiden Enden 2.2 und 2.3 die Enden des becherförmigen Tragkörpers 1.

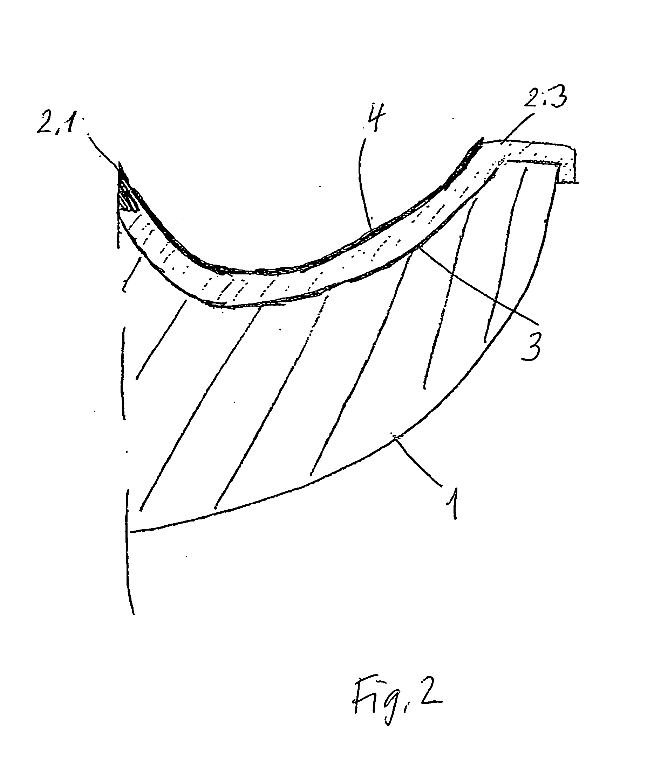

Bei der Ausführungsform gemäß Figur 2 ist wiederum ein Tragkörper 1 in Gestalt eines Peltonbechers vorgesehen. Der Einsatzkörper 2 ist wiederum mittels einer Klebstoffschicht 3 mit dem Tragkörper 1 verbunden. Auch hier bildet der Tragkörper 2 wieder eine Spitze 2.1 als Strahlteiler. Der Endbereich 2.3 des Einsatzkörpers 2 umgreift auch hier wiederum den Endbereich des Tragkörpers 1. Im Gegensatz zu der spitzen Ausführungsform gemäß Figur 1 ist jedoch hier eine geradlinige Ausführungsform gewählt.

Eine weitere Besonderheit der Ausführungsform gemäß Figur 2 besteht darin, dass der Einsatzkörper 2 eine Beschichtung 4 aufweist. Die Beschichtung 4 kann aus jeglichem Material bestehen, wiederum aus jenen Materialien, aus denen der Einsatzkörper im Falle der Ausführungsform gemäß Figur 1 besteht.

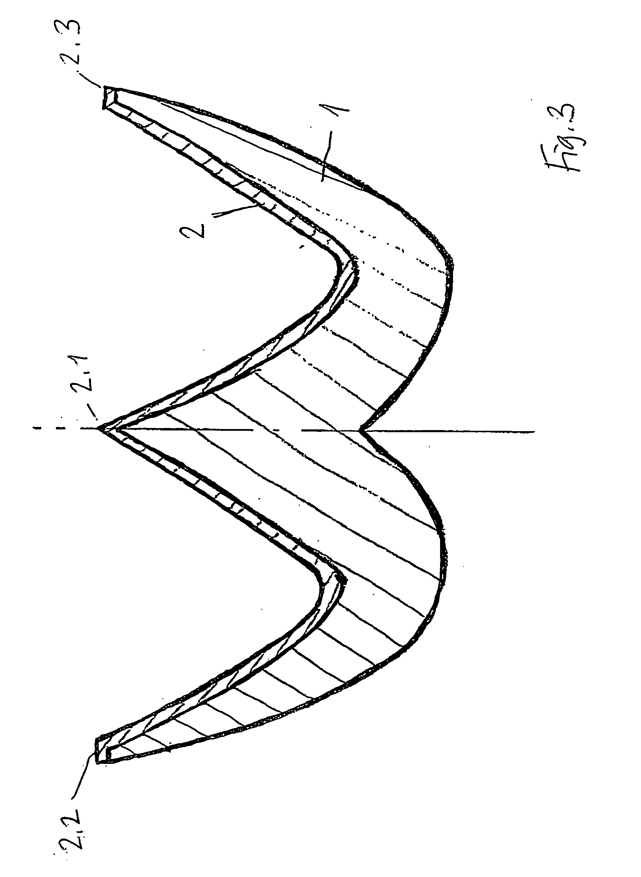

Bei der dritten Ausführungsform gemäß Figur 3 handelt es sich um einen bestehenden Becher einer bestehenden Maschine. Der Becher ist somit nicht eigens angefertigt, sondern bereits vorhanden. Er ist mit einem Einsatzkörper 2 bestückt, der nunmehr die Arbeitsfläche bildet, und die möglicherweise durch Verschleiß beeinträchtigte Arbeitsfläche des bestehenden Bechers 1 abdeckt. Auch hier ist wiederum die Verbindung zwischen dem bestehenden Becher 1 und dem Einsatzkörper 2 durch einen Klebstoff hergestellt.

Eine interessante Möglichkeit, den Einsatzkörper und den Tragkörper miteinander zu verbinden ist das Aufbringen einer Magnetkraft. Die Verbindung kann magnetisch oder elektromagnetisch sein. Bei Anwendung eines Elektromagneten lässt sich die Verbindung zwischen Tragkörper und Einsatz gewissermaßen durch Knopfdruck herstellen beziehungsweise wieder lösen.

Der Tragkörper beziehungsweise dessen Grenzfläche wird im Allgemeinen durch spanende Bearbeitung oder Nachbearbeitung hergestellt werden.

**Bezugszeichenliste**

| | |
|---|---|
| 1 | Tragkörper |
| 2 | Einsatzkörper |
| 2.1 | Strahlteiler |
| 2.2 | Endbereich |
| 2.3 | Endbereich |
| 3 | Klebstoffschicht |
| 4 | Beschichtung |

## Patentansprüche

1. Freistrahlturbine
mit einem Laufrad;
mit einer Mehrzahl von Bechern, die über den Umfang des Laufrades verteilt angeordnet sind;
jeder Becher weist zwei Schalen auf, die axial nebeneinander liegen, durch einen Strahlteiler (2.1) voneinander getrennt sind, und die vom Wasserstrahl beaufschlagte Arbeitsflächen haben; mit wenigstens einer Düse zum Aufbringen eines Wasserstrahles auf die Becher;
die Arbeitsflächen sind aus einem Einsatzkörper (2) gebildet;
der Einsatzkörper (2) ist von einem Tragkörper (1) getragen, der am Laufrad fixiert ist;
der Tragkörper (1) und der Einsatzkörper (2) weisen die Gestalt eines Peltonbechers auf;
Tragkörper (1) und Einsatzkörper (2) weisen Auflageflächen auf, die kongruent zueinander sind, sodass Tragkörper (1) und Einsatzkörper (2) satt aufeinander aufliegen, **gekennzeichnet durch** die folgenden Merkmale: der Einsatzkörper (2) ist mittels einer lösbaren Verbindung vom Tragkörper (1) entfernbar und wiederum an diesem fixierbar.

2. Freistrahlturbine nach Anspruch 1, **dadurch gekennzeichnet, dass** der Einsatzkörper (2) aus einem anderen Werkstoff als der Tragkörper (1) besteht.

3. Freistrahlturbine nach Anspruch 1 oder 2, **dadurch gekennzeichnet, dass** die Grenzflächen von Tragkörper (1) und Einsatzkörper (2) eben oder zylindrisch oder kugelig sind, oder eine sonstige regelmäßige Fläche aufweisen.

4. Freistrahlturbine nach einem der Ansprüche 1 bis 3, **dadurch gekennzeichnet, dass** die Einsatzkörper (2) und die Tragkörper (1) durch Verschrauben oder Kleben oder Löten oder Aufbringen einer Magnetkraft oder ein anderes Befestigungsverfahren miteinander verbunden sind.

5. Freistrahlturbine nach einem der Ansprüche 1 bis 4, **dadurch gekennzeichnet, dass** die Einsatzkörper (2) aus Kunststoff, Faserverbundstoff, Metall, Keramik, oder einem Komposit aus zwei oder mehreren dieser Werkstoffe gebildet ist.

6. Freistrahlturbine nach einem der Ansprüche 1 bis 5, **dadurch gekennzeichnet, dass** die Tragkörper (1) im Gießverfahren, im Spritzgussverfahren, im Tiefziehverfahren oder durch ein anderes Verfahren hergestellt sind.

7. Freistrahlturbine nach einem der Ansprüche 1 bis 6, **dadurch gekennzeichnet, dass** die Tragkörper (1) bestehende Peltonbecher einer bestehenden Maschine sind.

8. Verfahren zum Herstellen oder Nachrüsten eines Laufrads einer Freistrahlturbine,
mit den folgenden Schritten:
Erzeugen oder Bereitstellen eines bestehenden Laufrads, umfassend eine Mehrzahl von Bechern, die über den Umfang des Laufrads verteilt angeordnet sind, wobei jeder Becher zwei Schalen aufweist, die axial nebeneinander liegen, durch einen Strahlteiler voneinander getrennt sind, und die vom Wasserstrahl beaufschlagte Arbeitsflächen aufweisen;
Erzeugen von Einsatzkörpern (2), welche die Arbeitsfläche bilden;
Einsetzen der Einsatzkörper (2) in Tragkörper (1), die am Laufrad fixiert sind, wobei die einander gegenüberliegenden Auflageflächen von Einsatzkörper (3) und Tragkörper (1) kongruent zueinander sind sodass Einsatzkörper (2) und Tragkörper (1) satt aufeinander aufliegen, wobei der Tragkörper (1) und der Einsatzkörper (2) die Gestalt eines Peltonbechers aufweisen, wobei im Falle des Nachrüstens die Tragkörper bestehende Becher sind;
**gekennzeichnet durch** den folgenden Schritt: Lösbares Fixieren der Einsatzkörper (2) am Tragkörper (1) mittels einer lösbaren Verbindung.

## Claims

1. A free jet turbine
having a blade wheel;
with a plurality of cups, which are distributed over the circumference of the blade wheel;
each cup has two shells, which lie axially close to one another and are separated from each other by a jet divider (2.1), and which exhibit working surfaces impacted by the water jet;
having at least one nozzle for applying a water jet to the cups;
the working surfaces are formed by an insertion body (2);
the insertion body (2) is carried by a supporting body (1), which is fixed to the blade wheel;
the supporting body (1) and the insertion body (2) have the form of a Pelton cup;
supporting body (1) and insertion body (2) have bearing surfaces, which are congruent to one another, so that supporting body (1) and insertion body (2) lie completely on top of one another, **characterised by** the following features: the insertion body (2) can be removed from the supporting body (1) by means of a detachable connection and can be fixed thereto again.

2. A free jet turbine according to claim 1, **characterised in that** the insertion body (2) consists of another material than the supporting body (1).

3. A free jet turbine according to claim 1 or 2, **characterised in that** the boundaries of supporting body (1) and insertion body (2) are flat or cylindrical or spherical, or exhibit any other regular face.

4. A free jet turbine according to one of the claims 1 to 3, **characterised in that** the insertion body (2) and the supporting bodies (1) are connected to each other by screwing or gluing or soldering or application of a magnetic force or another fastening method.

5. A free jet turbine according to one of the claims 1 to 4, **characterised in that** the insertion bodies (2) consist of synthetic material, fibre composite material, metal, ceramic or another composite made up of two or several of said materials.

6. A free jet turbine according to one of the claims 1 to 5, **characterised in that** the supporting bodies (1) are obtained in a casting method, an injection moulding method, a thermoforming method or another method.

7. A free jet turbine according to one of the claims 1 to 6, **characterised in that** the supporting bodies (1) are existing Pelton cups of an existing machine.

8. A method for manufacturing or retrofitting a blade wheel of a free jet turbine, with the following steps:
production or preparation of an existing blade wheel, comprising a plurality of cups, which are distributed over the circumference of the blade wheel,
whereas each cup comprises two shells, which lie axially close to one another and are separated from each other by a jet divider, and which exhibit working surfaces impacted by the water jet;
production of insertion bodies (2), forming the working surface;
inserting the insertion bodies (2) into supporting bodies (1), which are fixed to the blade wheel, whereas the bearing surfaces, opposite to one another,
of insertion body (3) and supporting body (1) are congruent to one another so that insertion body (2) and supporting body (1) lie completely on top of one another, whereas the supporting body (1) and the insertion body (2) have the form of a Pelton cup, whereas when retrofitting the supporting bodies are existing cups; **characterised by** the following step: detachable fixation of the insertion bodies (2) to the supporting body (1) by means of a detachable connection.

## Revendications

1. Turbine à jet libre
possédant une roues à aubes;
avec une pluralité de gobelets, qui sont répartis sur la circonférence de la roue à aubes;
chaque gobelet possède deux coques, reposant axialement à proximité l'une de l'autre et séparées l'une de l'autre par un diviseur de jet (2.1), et présentant des surfaces de travail impactées par le jet d'eau;
ayant au moins une buse pour appliquer un jet d'eau sur les gobelets;
les surfaces de travail sont constituées par un corps d'insertion (2);
le corps d'insertion (2) est porté par un corps support (1), qui est fixé à la roue à aubes;
le corps support (1) et le corps d'insertion (2) ont la forme d'un gobelet Pelton;
corps support (1) et corps d'insertion (2) ont des surfaces d'appui, qui sont congruentes l'une à l'autre de telle sorte que le corps support (1) et le corps d'insertion (2) reposent complètement l'un au-dessus de l'autre, **caractérisée par** les propriétés suivantes: le corps d'insertion (2) peut être retirée du corps support (1) au moyen d'une connexion amovible et peut y être fixée de nouveau.

2. Turbine à jet libre selon la revendication 1, **caractérisée en ce que** le corps d'insertion (2) se compose d'un autre matériau que le corps support (1).

3. Turbine à jet libre selon la revendication 1 ou 2, **caractérisée en ce que** les limites du corps support (1) et du corps d'insertion (2) sont plates ou cylindriques ou sphériques ou présentent toute autre surface régulière.

4. Turbine à jet libre selon l'une des revendications 1 à 3, **caractérisée en ce que** le corps d'insertion (2) et les corps support (1) sont connectés l'un à l'autre par vissage ou collage ou brasage ou application d'une force magnétique ou un autre procédé de fixation.

5. Turbine à jet libre selon l'une des revendications 1 à 4, **caractérisée en ce que** les corps d'insertion (2) se composent de matériau synthétique, matériau composite fibreux, métal, céramique ou autre composite constitué de deux ou plusieurs desdits matériaux.

6. Turbine à jet libre selon l'une des revendications 1 à 5, **caractérisée en ce que** les corps support (1) s'obtiennent à l'aide d'un procédé de coulage, un procédé de moulage injection, un procédé de thermoformage ou autre.

7. Turbine à jet libre selon l'une des revendications 1 à 6, **caractérisée en ce que** les corps support (1) sont des gobelets Pelton existants d'une machine existante.

8. Procédé de fabrication ou de rattrapage d'une roue à aubes de turbine à jet libre, comprenant les étapes suivantes :
production ou préparation d'un roue à aubes existante, comportant une pluralité de gobelets, qui sont répartis sur la circonférence de la roue à aubes;
où chaque gobelet comprend deux coques, reposant axialement à proximité l'un de l'autre et séparées l'une de l'autre par un diviseur de jet, et
présentant des surfaces de travail impactées par le jet d'eau;
production de corps d'insertion (2), constituant la surface de travail;
insertion des corps d'insertion (2) dans des corps support (1), qui sont fixés à la roue à aubes;
alors que les surfaces d'appui, en vis-à-vis, du corps d'insertion (3) et du corps support (1) sont congruentes l'une à l'autre de telle sorte que le corps d'insertion (2) et le corps support (1) reposent complètement l'un au-dessus de l'autre, où le corps support (1) et le corps d'insertion (2) ont la forme d'un gobelet Pelton, où lors de la mise à niveau, les corps support sont les gobelets existants; **caractérisé par** la phase suivante: fixation amovible des corps d'insertion (2) au corps support (1) au moyen d'une connexion amovible.
